Europäisches Patentamt

European Patent Office

Office européen des brevets

(11) Publication number: **0 376 255**
**A2**

## (12) EUROPEAN PATENT APPLICATION

(21) Application number: 89123968.3

(22) Date of filing: 27.12.89

(51) Int. Cl.5: **G06F 9/38**

(30) Priority: **27.12.88 JP 327899/88**

(43) Date of publication of application:
**04.07.90 Bulletin 90/27**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Maeda, Kenichi**
**1835-20 Fumida**
**Kamakura-shi Kanagawa-ken(JP)**
Inventor: **Saito, Mitsuo**
**Greenhaitsu 6-2-105 Nagasawa 550**
**Yokosuka-shi Kanagawa-ken(JP)**
Inventor: **Aikawa, Takeshi**
**2-44-2 Kamiishihara**
**Chofu-shi Tokyo(JP)**
Inventor: **Imai, Toru**
**4-402 Kitaya-cho Nakahara-ku**
**Kawasaki-shi Kanagawa-ken(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **Method and apparatus for controlling branching.**

(57) A method and an apparatus for controlling branching capable of simplifying hardware structure, preventing accidental loss of information, setting the branching address table and the branch target address table separately. According to the invention, branching addresses and branch target addresses of the branching instructions are pre-registered, a coincidence of a memory address indicated by a program counter (8) and any one of the pre-registered branching addresses, and the program counter means (4) is controlled to indicate a branch target address corresponding to a branching address for which the coincidence is detected as the memory address next.

FIG.1

# METHOD AND APPARATUS FOR CONTROLLING BRANCHING

## BACKGROUND OF THE INVENTION

### Field of the Invention

The present invention relates to a method and an apparatus for controlling operations required by branching instructions utilized in computers.

### Description of the Background Art

As a method of executing branching instructions in a computer at a high speed, there is a technique called a branch target buffer mechanism.

In the branch target buffer mechanism, a branch target address and an instruction are stored in a high speed accessible buffer memory, so that the subsequent branchings using the same branch target address is performed at a high speed by fetching the instruction of the branch target address from this buffer memory.

However, the use of the branch target buffer mechanism requires a complicated hardware structure to control the buffer memory, so that the apparatus inevitably become a large size and expensive.

Moreover, in the branch target buffer mechanism, when the buffer memory become full of entries, new entries would be overwritten so that the informations stored in the buffer memory, including those that might be required in future operations, could be lost.

On the other hand, there is another technique called a, look-ahead branch detection system, disclosed in U.S.Pat. Serial No. 3,551,895.

In this look-ahead branch detection system, the branch execution is performed at a high speed by storing branch information in a branch associative memory using a special advance branch instruction for pre-registering potential branching.

However, in this look-ahead branch detection system, both a branching address table and a branch target address table have to be re-written even when only the branch target address is changed at a time of execution, because only a single advance branch instruction is used, and this fact deteriorates the processing efficiency in a computer using the look-ahead branch detection system.

## SUMMARY OF THE INVENTION

It is therefore an object of the present invention to provide a method and an apparatus for controlling branching capable of simplifying hardware structure, preventing accidental loss of information, setting the branching address table and the branch target address table separately such that the processing efficiency can be maintained even when only the branch target address is changed at a time of execution.

According to one aspect of the present invention there is provided an apparatus for controlling branching, comprising: memory means for storing instructions including branching instructions; program counter means for specifying an instruction to be executed by indicating a memory address in the memory means; means for executing the instruction stored in the memory means specified by the program counter means; branching address table means for pre-registering branching addresses of the branching instructions; branch target address table means for pre-registering branch target addresses of the branching instructions; means for detecting a coincidence of the memory address indicated by the program counter means and any one of the branching addresses stored in the branching address table means; and means for making the program counter means to indicate a branch target address corresponding to a branching address for which the coincidence is detected by the detecting means as the memory address next.

According to another aspect of the present invention there is provided a method of controlling branching, comprising the steps of: storing instructions including branching instructions in a memory means; specifying an instruction to be executed by indicating a memory address in the memory means by a program counter means; executing the instruction stored in the memory means specified by the program counter means; pre-registering branching addresses of the branching instructions in a branching address table means; pre-registering branch target addresses of the branching instructions in a branch target address table means; detecting a coincidence of the memory address indicated by the program counter means and any one of the branching addresses stored in the branching address table means; and making the program counter means to indicate a branch target address corresponding to a branching address for which the coincidence is detected as the memory address next.

Other features and advantages of the present invention will become apparent from the following description taken in conjunction with the accompanying drawings.

BRIEF DESCRIPTION OF THE DRAWINGS

Fig. 1 is a schematic block diagram of one embodiment of an apparatus for controlling branching according to the present invention.

Fig. 2 is an illustration showing an example of program requiring branching operations.

Fig. 3 is an illustration showing an example of a conventional branch instruction.

Fig. 4 is an illustration showing an example of a branch instruction to be used in the present invention.

Fig. 5 is a schematic block diagram of another embodiment of an apparatus for controlling branching according to the present invention.

DETAILED DESCRIPTION OF THE PREFERRED EMBODIMENTS

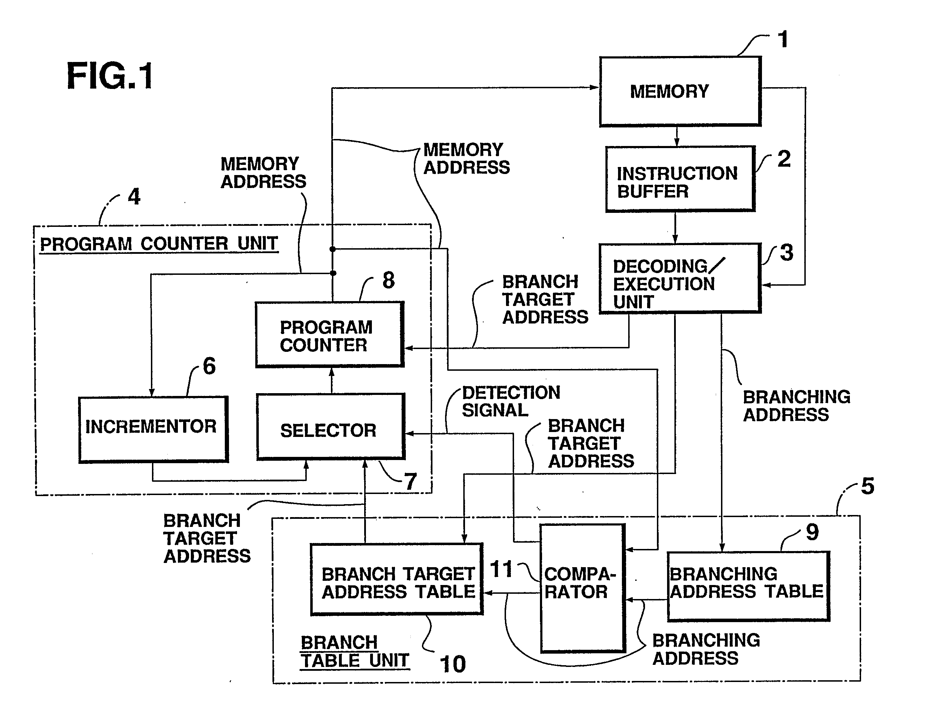

Referring now to Fig. 1, there is shown one embodiment of an apparatus for controlling branching according to the present invention.

In this embodiment, the apparatus comprises a memory 1 for storing instructions, an instruction buffer 2 for temporarily storing an instruction read out from the memory 1, a decoding/execution unit 3 for decoding the instruction in the instruction buffer 2 and executing that instruction, a program counter unit 4 for specifying a memory address in the memory 1 for an instruction to be read out to the instruction buffer 2 and to be executed by the decoding/execution unit 3 next, and a branch table unit 5 including a branching address table 9, a branch target address 10, and a comparator 11, for storing branching addresses and branch target addresses for some branching instructions, and for detecting occurrence of situations in which one of the stored branching instruction is to be executed by the decoding/execution unit 3 in order to feed the corresponding branch target address to the program counter unit 4 so as to speed up the branching operation.

Thus, the memory 1 reads out the instruction stored in a memory address specified by the program counter unit 4, and the instruction buffer 2 fetches this instruction read out by the memory 1 in order to feed it to the decoding/execution unit 3 at which the instruction is decoded and executed.

Now, in this embodiment, in addition to a branching instruction, a branching address table set up instruction and a branch target address table set up instruction are used.

When the branching address table set up instruction is received by the decoding/execution unit 3, the decoding/execution unit 3 reads out data in the memory 1 specified by this branching address table set up instruction and generates the branching address to be given to a branching address table 9 of the branch table unit 5 in accordance with these data.

When the branch target address table set up instruction is received by the decoding/execution unit 3, the decoding/execution unit 3 reads out data in the memory 1 specified by this branch target address table set up instruction and generates the branch target address to be given to a branch target address table 10 of the branch table unit 5 in accordance with these data.

By means of these branching address table set up instruction and the branch target address table set up instruction, the branching addresses and the branch target addresses of some branching instructions are to be pre-registered in the branch table unit 5.

Now, when the decoding/execution unit 3 is to execute the branching instruction for which the branching address table 9 and the branch target address 10 are not set up yet, this branching instruction is executed while the decoding/execution unit 3 also generates the branch target address to be given to the program counter unit 4 in accordance with the branching instruction.

On the other hand, when the decoding/execution unit 3 is to execute the branching instruction for which the branching address table 9 and the branch target address 10 are already set up, this is detected by the comparator 11 of the branch table unit 5 which compares the memory address generated by the program counter unit 4 and each of the branching addresses stored in the branching address table 9, and generates a detection signal to the program counter unit 4 when any one of the branching addresses stored in the branching address table 9 coincides with the memory address generated by the program counter unit 4. When the detection signal is generated by the comparator 11, the branch target address in the branch target address table 10 corresponding to the detected branching address in the branching address table 9 is also fed to the program counter unit 4.

The program counter unit 4 has an incrementor 6 for generating a new memory address by giving an increment to the previous memory address, a selector 7 for selecting the new memory address from the incrementor 6 when the detection signal is not received from the comparator 11 of the branch table unit 5, and otherwise selecting the branch target address from the branch target address table 10 of the branch table unit 5, and a program counter 8 for producing the memory address to be given to the memory 1 by taking the branch target address from the decoding/execution unit 3 as the memory address whenever it is generated at the decoding/execution unit 3, and otherwise taking that selected by the selector 7 as the memory address.

Thus, when the decoding/execution unit 3 is not generating the branch target address and the comparator 11 of the branch table unit 5 is not generating the detection signal, the instruction to be executed at the decoding/execution unit 3 is not the branching instruction, and the program counter 4 sequentially generates the memory addresses given by the incrementor 6 so as to read out and execute the instructions in the memory 1 sequentially.

When the decoding/execution unit 3 generates the branch target address, this branch target address is taken as the next memory address to be given to the memory 1 so as to read out and execute the instruction in this branch target address.

When the comparator 11 of the branch table unit 5 generates the detection signal, the branch target address from the branch target address table 10 of the branch table unit 5 is taken as the next memory address to be given to the memory 1 so as to read out and execute the instruction in this branch target address.

More specifically, the branching instruction, the branching address table set up instruction and the branch target address table set up instruction can be given in this embodiment as follows.

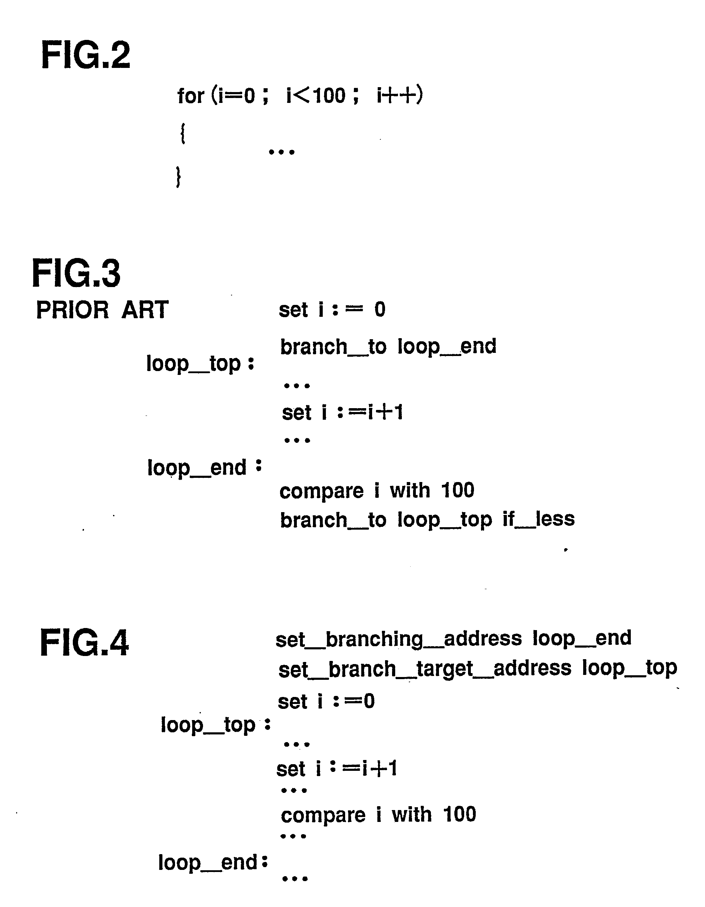

As an example, Fig. 2 shows the branch instruction comprising a multiple repetitions of an instruction written in C language. for the branching operation required by such a branching instruction, a series of instructions such as that shown in Fig. 3 had been generated conventionally, if the speed of branching operations is not concerned. In this embodiment, however, instead of such a series of instructions, a series of instructions such as that shown in Fig. 4 is generated by a compiler or a programmer. Namely, at the first and second lines, the branching address and the branch target address are specified as "loop end" and "loop top", respectively, before the content of the branch instruction is specified, so that the branching address table set up instruction and the branch target address table set up instruction can be given before the actual execution of the branching instruction, by means of which the branching address and the branch target address generated by the decoding/execution unit 3 can be pre-registered in the branching address table 9 and the branch target address table 10, respectively.

Then, as described above, when the decoding/execution unit 3 is not generating the branch target address and the comparator 11 of the branch table unit 5 is not generating the detection signal, the instruction to be executed at the decoding/execution unit 3 is not the branching instruction, and the program counter 4 sequentially generates the memory addresses given by the incrementor 6 so as to read out and execute the instructions in the memory 1 sequentially.

When the decoding/execution unit 3 is to execute the branching instruction for which the branching address table 9 and the branch target address 10 are not set up yet, this branching instruction is executed while the decoding/execution unit 3 also generates the branch target address to be given to the program counter unit 4 in accordance with the branching instruction, such that this branch target address is taken as the next memory address to be given to the memory 1 so as to read out and execute the instruction in this branch target address.

On the other hand, when the decoding/execution unit 3 is to execute the branching instruction for which the branching address table 9 and the branch target address 10 are already set up, this is detected by the comparator 11 of the branch table unit 5 which compares the memory address generated by the program counter unit 4 and each of the branching addresses stored in the branching address table 9, and generates a detection signal to the program counter unit 4 when any one of the branching addresses stored in the branching address table 9 coincides with the memory address generated by the program counter unit 4. When the detection signal is generated by the comparator 11, the branch target address in the branch target address table 10 corresponding to the detected branching address in the branching address table 9 is also fed to the program counter unit 4, such that this branch target address from the branch target address table 10 of the branch table unit 5 is taken as the next memory address to be given to the memory 1 so as to read out and execute the instruction in this branch target address.

As described, according to this embodiment, the branching address and the branch target address are pre-registered in the branching address table 9 and the branch target address 10, respectively, the branching operations can be handle at a high speed.

Also, in this embodiment, the branching address table 9 and the branch target address table 10 are set up by means of the branching address table set up instruction and the branch target address table set up instruction, respectively, so that the accidental loss of the necessary informations can be prevented.

Moreover, this embodiment can be implemented by a simple hardware configuration.

Furthermore, in this embodiment, the branching address table 9 and the branch target address table 10 are separately set up, so that the processing efficiency can be maintained even when only the branch target address is changed at a time of execution, as in a case of a dynamic link, by re-writing only the branch target address table 10.

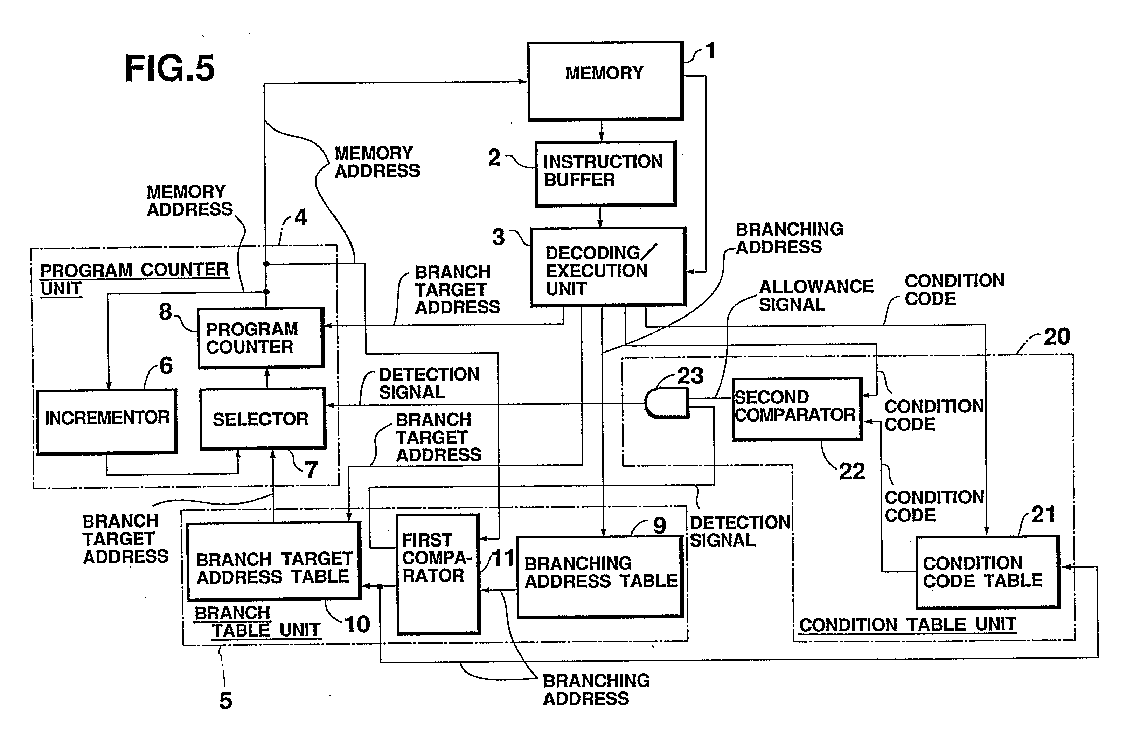

Referring now to Fig. 5, there is shown another embodiment of an apparatus for controlling branching according to the present invention. In this embodiment, those elements corresponding to the elements of the previous embodiments will be given the same reference numerals in the figures and their description will generally be omitted.

This embodiment differs from the previous embodiment in its incorporation of a condition table unit 20 in order to be able to handle conditional branching operations. Correspondingly, the decoding/execution unit 3 in this embodiment has an additional function of feeding the condition code to the condition table unit 20.

The condition table unit 20 comprises a condition code table 21 for pre-registering condition codes for some branching instructions, a second selector 22 for comparing the condition code from the decoding/execution unit 3 and each of the condition codes stored in the condition code table 21, and for generating an allowance signal when the condition code from the decoding/execution unit 3 coincides with any one of the condition codes stored in the condition code table 21, and an AND gate 23 for feeding the detection signal from the first comparator 11 of the branch table unit 5 whenever both the detection signal and the allowance signal are received.

Thus, when the branching instruction is to be executed by the decoding/execution unit 3, a condition code table set up instruction is given first, by means of which an appropriate condition code is read out from the memory 1 and pre-registered in the condition code table 21.

In actually executing the branching instruction, whenever the detection signal is generated by the first comparator 11, the branching address for which the detection signal is generated by the first comparator 11 is fed to the condition table unit 20 so as to feed the second comparator 22 with the condition code corresponding to that branching address which is to be compared with the condition code from the decoding/execution unit 3.

Then, the allowance signal is generated by the second comparator 22 when the condition code from the decoding/execution unit 3 coincides with any one of the condition codes stored in the condition code table 21, and the AND gate 23 feeds the detection signal from the first comparator 11 of the branch table unit 5 whenever both the detection signal and the allowance signal are received such that the branch target address from the branch target address table 10 of the branch table unit 5 is selected by the selector 7 of the program counter unit 4.

Thus, in this embodiment, the conditional branching operations can also be handled at a high speed, while keeping various advantages of the previous embodiment.

It is to be noted that in the above embodiments, the first and second comparators 11 and 22, and the AND gate 23 may be integrated together into a single IC configuration.

Also, in addition to the branching address table set up instruction, the branch target address table set up instruction, and the condition code table set up instruction, other set up instructions for setting up various combinations of the branching address table, branch target address table, and condition code table simultaneously may be provided.

Besides these, many modifications and variations of the above embodiments may be made without departing from the novel and advantageous features of the present invention. Accordingly, all such modifications and variations are intended to be included within the scope of the appended claims.

Reference signs in the claims are intended for better understanding and shall not limit the scope.

## Claims

1. An apparatus for controlling branching, comprising:
memory means(1) for storing instructions including branching instructions;
program counter means(4) for specifying an instruction to be executed by indicating a memory address in the memory means(1);
means(3) for executing the instruction stored in the memory means(1) specified by the program counter means(4); characterized by further comprising:
branching address table means(9) for pre-registering branching addresses of the branching instructions;
branch target address table means(10) for pre-registering branch target addresses of the branching instructions;
means(11) for detecting a coincidence of the memory address indicated by the program counter means and any one of the branching addresses stored in the branching address table means(9); and
means(7, 11) for making the program counter means(4) to indicate a branch target address corresponding to a branching address for which the coincidence is detected by the detecting means(11) as the memory address next.

2. The apparatus of claim 1, wherein the branching addresses and the branch target addresses are separately pre-registered by using separate instructions for pre-registrations of the branching addresses and the branch target addresses.

3. The apparatus of claim 1, wherein the branching instructions includes conditional branching instructions, and further comprising:

condition code table means(21) for pre-registering condition codes of the conditional branching instructions;

means(22) for checking a matching of a condition code of a conditional branching instruction to be executed by the executing means(3) and a condition code in the condition code table means(21) corresponding to a branching address of that conditional branching instruction; and

means(23) for allowing making means(7, 11) to make the program counter means(4) to indicate a branch target address corresponding to a branching address for which the coincidence is detected by the detecting means(11) as the memory address next, only when the matching is checked by the checking means(22).

4. The apparatus of claim 3, wherein the branching addresses, the branch target addresses, and the condition codes are separately pre-registered by using separate instructions for pre-registrations of the branching addresses, the branch target addresses, and the condition codes.

5. The apparatus of claim 4, wherein combinations of one of the branching addresses and the branch target addresses, and the condition codes can be pre-registered simultaneously for some of the branching instructions by using distinctive instructions for pre-registrations of these combinations.

6. A method of controlling branching, comprising the steps of:

storing instructions including branching instructions in a memory means(1);

specifying an instruction to be executed by indicating a memory address in the memory means(1) by a program counter means(4);

executing the instruction stored in the memory means(1) specified by the program counter means-(4);

characterized by further comprising the steps of:

pre-registering branching addresses of the branching instructions in a branching address table means(9);

pre-registering branch target addresses of the branching instructions in a branch target address table means(10);

detecting a coincidence of the memory address indicated by the program counter means(4) and any one of the branching addresses stored in the branching address table means(9); and

making the program counter means(4) to indicate a branch target address corresponding to a branching address for which the coincidence is detected as the memory address next.

7. The method of claim 6, wherein the branching addresses and the branch target addresses are separately pre-registered by using separate instructions for pre-registrations of the branching addresses and the branch target addresses.

8. The method of claim 6, wherein the branching instructions includes conditional branching instructions, and further comprising the steps of:

pre-registering condition codes of the conditional branching instructions in a condition code table means(21);

checking a matching of a condition code of a conditional branching instruction to be executed and a condition code in the condition code table means(21) corresponding to a branching address of that conditional branching instruction; and

allowing to make the program counter means(4) to indicate a branch target address corresponding to a branching address for which the coincidence is detected as the memory address next, only when the matching is checked.

9. The method of claim 8, wherein the branching addresses, the branch target addresses, and the condition codes are separately pre-registered by using separate instructions for pre-registrations of the branching addresses, the branch target addresses, and the condition codes.

10. The method of claim 9, wherein combinations of one of the branching addresses and the branch target addresses, and the condition codes can be pre-registered simultaneously for some of the branching instructions by using distinctive instructions for pre-registrations of these combinations.

# FIG.1

MEMORY — 1

INSTRUCTION BUFFER — 2

DECODING/EXECUTION UNIT — 3

MEMORY ADDRESS

MEMORY ADDRESS

PROGRAM COUNTER UNIT — 4

BRANCH TARGET ADDRESS

PROGRAM COUNTER — 8

INCREMENTOR — 6

SELECTOR — 7

DETECTION SIGNAL

BRANCH TARGET ADDRESS

BRANCHING ADDRESS

BRANCH TARGET ADDRESS

— 5

BRANCH TARGET ADDRESS TABLE

11 — COMPA-RATOR

BRANCHING ADDRESS TABLE — 9

BRANCH TABLE UNIT — 10

BRANCHING ADDRESS

EP 0 376 255 A2

# FIG.2

```
for (i=0 ;  i<100 ;  i++)
    {
            ...
    }
```

# FIG.3

**PRIOR ART**

```
                    set i := 0

                    branch_to loop_end
loop_top :
                    ...
                    set i :=i+1
                    ...
loop_end :
                    compare i with 100
                    branch_to loop_top if_less
```

# FIG.4

```
                    set_branching_address loop_end
                    set_branch_target_address loop_top
                    set i :=0
loop_top :
                    ...
                    set i :=i+1
                    ...
                    compare i with 100
                    ...
loop_end :
                    ...
```

FIG.5

MEMORY 1

INSTRUCTION BUFFER 2

DECODING/EXECUTION UNIT 3

PROGRAM COUNTER UNIT 4

PROGRAM COUNTER 8

INCREMENTOR 6

SELECTOR 7

BRANCH TABLE UNIT 5

BRANCH TARGET ADDRESS TABLE 10

FIRST COMPARATOR

BRANCHING ADDRESS TABLE 9

11

CONDITION TABLE UNIT

CONDITION CODE TABLE 21

SECOND COMPARATOR 22

23

20

MEMORY ADDRESS

BRANCH TARGET ADDRESS

DETECTION SIGNAL

BRANCH TARGET ADDRESS

BRANCHING ADDRESS

DETECTION SIGNAL

BRANCH TARGET ADDRESS

BRANCHING ADDRESS

CONDITION CODE

CONDITION CODE

CONDITION CODE

CONDITION CODE

ALLOWANCE SIGNAL

BRANCHING ADDRESS

MEMORY ADDRESS